# EUROPEAN PATENT SPECIFICATION

(11) **EP 3 905 084 B1**
(45) Date of publication and mention of the grant of the patent: **28.01.2026**
(21) Application number: 19903167.5
(22) Date of filing: 09.10.2019
(51) Int. Cl.: G06F 21/53, G06F 21/56, G06N 3/00

(54) **METHOD AND DEVICE FOR DETECTING MALWARE**
VERFAHREN UND VORRICHTUNG ZUR ERKENNUNG EINES SCHADPROGRAMMS
PROCÉDÉ ET DISPOSITIF DE DÉTECTION DE LOGICIELS MALVEILLANTS

(30) Priority: 26.12.2018 CN 201811601373
(43) Date of publication of application: 03.11.2021
(73) Proprietor: ZTE Corporation, Shenzhen, Guangdong 518057 (CN)
(72) Inventor: YAO, Yunguo, Shenzhen, Guangdong 518057 (CN)
(74) Representative: Mozzi, Matteo
(86) International application number: PCT/CN2019/110087
(87) International publication number: WO 2020/134311

(56) References cited:
- WO-A1-2007/113709
- CN-A- 104 766 011
- CN-A- 105 468 977
- CN-A- 107 273 747
- CN-A- 107 688 743
- US-A1- 2016 328 742
- US-A1- 2017 366 562
- US-A1- 2018 018 459

## Description

### Technical Field

Embodiments of the present disclosure relate to, but are not limited to, the field of network security, in particular to a malware detection method and device, and a computer-readable storage medium.

### Background

With the rapid development of computer technologies, the Internet brings a lot of convenience, but meanwhile, malicious programs (also called malware, malicious code, etc.) run through the Internet, threatening information security, property security, etc.

Analysis methods for the malicious programs are generally divided into a static analysis method and a dynamic analysis method. The difference between the two methods mainly lies in whether the malicious program is executed or not.

The static analysis method generally includes extracting file feature codes, analyzing binary files, disassembling, calculating information gain entropy, etc. The method has the advantages that malicious programs do not need to be executed and therefore the static analysis method is a safer analysis method. But in order to prevent analysts from analyzing, malicious programs are often subjected to code obfuscation, packed, etc., which makes it difficult to analyze malicious programs using the static analysis method.

The dynamic analysis method generally includes sending malicious programs to a sandbox, running in the sandbox, capturing malicious behaviors, such as file operations and network interactions. The method has the advantages that malicious behaviors of malicious programs can be directly captured, and obstacles such as code obfuscation, difficulty in program unpacking and the like are omitted. The dynamic analysis method may capture an Application Programming Interface (API) executed by the malicious program. At present, the diagnosis of API calls is performed through rule matching. The rule is gradually formulated by manually analyzing the API calls of the malicious program, and therefore the detection results have high false alarm rate and false alarm rate. Aiming at the bottleneck of a related rule matching technology, using an Artificial Intelligence (AI) algorithm to identify malicious programs based on API calls is a good solution. For example, an API sequence is processed, parameters are discarded, and then malicious programs are identified by using AI. Such processing actually has lost a lot of useful information of a program, which has defects in the identification of malicious programs. The parameter form and value in the API calls are complex, researchers propose that the overall API parameters are hashed, but there are still a number of defects in this approach. For example, as long as a file name is followed by an arbitrary random number, the entire hash value will be changed, and when hashing a large number of strings, a hash collision will occur, thereby resulting in two strings that are not otherwise related having the same representation.

US2017366562A1 provides a scheme for on-device maliciousness categorization of application programs for mobile devices.

US2018018459A1 provides a scheme for notification of maliciousness categorization of application programs for mobile devices.

US2016328742A1 provides systems and methods for monitoring malicious software engaging in online advertising fraud or other form of deceit.

### Summary

The embodiments of the present disclosure provide a malware detection method and device, and a computer-readable storage medium, which can improve the detection accuracy.

The malware detection method and device and the computer-readable storage medium in the present disclosure are set out in the appended set of claims.

The embodiments of the present disclosure provide a malware detection method, which includes: running software to be detected in a sandbox, and acquiring an API sequence of the software to be detected, wherein the API sequence includes an API name and at least one API parameter term obtained by segmenting a corresponding API parameter; and determining whether the software to be detected is malware according to the API sequence of the software to be detected.

The embodiments of the present disclosure provide a malware detection device, which includes: a sequence acquisition module, configured to run software to be detected in a sandbox, and acquire an API sequence of the software to be detected, wherein the API sequence includes an API name and at least one API parameter term obtained by segmenting a corresponding API parameter; and a detection module, configured to determine whether the software to be detected is malware according to the API sequence of the software to be detected.

The embodiments of the present disclosure provide a malware detection device, which includes a processor and a computer-readable storage medium having stored therein instructions that, when executed by the processor, implement any of the malware detection methods described above.

The embodiments of the present disclosure provide a computer-readable storage medium, which has stored thereon computer programs that, when executed by a processor, implement the operations of any of the malware detection methods described above.

The embodiments of the present disclosure include running software to be detected in a sandbox, and acquiring an API sequence of the software to be detected, wherein the API sequence includes an API name and at least one API parameter term obtained by segmenting a corresponding API parameter; and determining whether the software to be detected is malware according to the API sequence of the software to be detected. In the embodiments of the present disclosure, whether software to be detected is malware is determined based on an API sequence including an API name and at least one API parameter term obtained by segmenting an API parameter, and information in a malicious behavior is fully utilized. Compared with the method in which only an API name sequence is used in the detection or in which the API parameters is hashed as a whole, the method has a better representation effect, effectively avoids interference from random numbers or irregular strings, and improves the detection accuracy by extracting meaningful strings as features for detection.

Other features and advantages of the embodiments of the present disclosure will be explained in the subsequent description, and partly become obvious from the description, or be understood by implementing the embodiments of the present disclosure. The objects and other advantages of the embodiments of the present disclosure may be realized and attained by the structure particularly pointed out in the description, the claims as well as the accompanying drawings.

### Brief Description of the Drawings

The accompanying drawings, which are included to provide a further understanding of the technical solutions of the embodiments of the present disclosure and are incorporated in and constitute a part of the description, serve to explain the technical solutions of the embodiments of the present disclosure together with the embodiments of the present disclosure, and are not to be construed as limiting the technical solutions of the embodiments of the present disclosure.
Fig. 1 is a flowchart of a malware detection method according to some embodiments of the present disclosure; and
Fig. 2 is a structure composition diagram of a malware detection device according to some other embodiments of the present disclosure.

### Detailed Description

The present disclosure is described below in detail with reference to the drawings and in conjunction with the embodiments. It is to be noted that embodiments in the present application and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

The embodiments of the present disclosure will be described in detail below with reference to the accompanying drawings. It should be noted that in the case of no conflict, the embodiments in the present disclosure and the features in the embodiments may be arbitrarily combined with each other.

The operations shown in the flowchart of the drawings may be executed in a computer system including, for example, a set of computer-executable instructions. Moreover, although a logical sequence is shown in the flowchart, in some cases, the operations shown or described may be performed in a different sequence from the sequence herein.

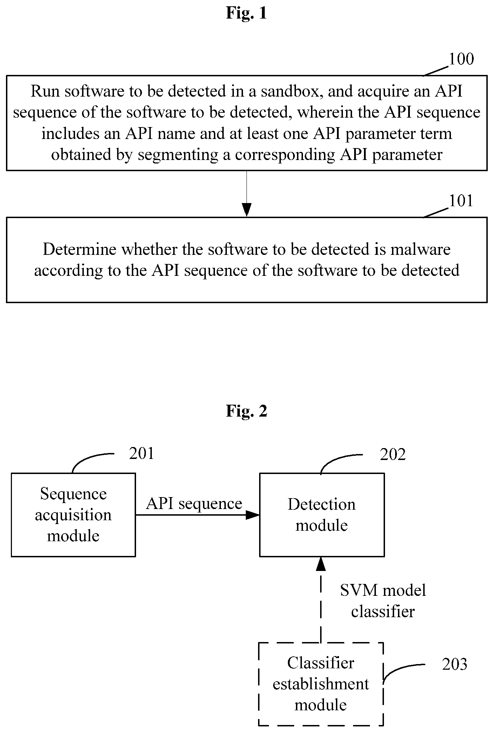

Referring to Fig. 1, some embodiments of the present disclosure provide a malware detection method, which includes the following operations.

In operation 100, software to be detected is run in a sandbox, and an API sequence of the software to be detected is acquired. The API sequence includes an API name and at least one API parameter term obtained by segmenting a corresponding API parameter.

In some other embodiments of the present disclosure, the at least one API parameter term has the same order in the API sequence and in the API parameter, thereby ensuring the accuracy of a final detection result.

In some other embodiments of the present disclosure, the operation of acquiring the API sequence of the software to be detected includes the following operations.

The API name and the API parameter of the software to be detected are acquired.

The API parameter is segmented to obtain the at least one API parameter term. The API sequence is formed by the API name and the at least one API parameter term.

For example, the API sequence may be [API name 1, API parameter term 1 of API name 1, API parameter term 2 of API name 1, ..., API name 2, API parameter term 1 of API name 2, API parameter term 2 of API name 2, ...].

In some other embodiments of the present disclosure, the operation of segmenting the API parameter to obtain the at least one API parameter term includes the following operations. A segmentation method is determined according to the API name. The API parameter is segmented according to the determined segmentation method to obtain the at least one API parameter term.

The operation of determining the segmentation method according to the API name includes the following operation.

The segmentation method corresponding to the API name is searched in a preset corresponding relationship between API names and segmentation methods.

Several segmentation methods are described below.
(1) In a case where the API parameter is of a common type, i.e. the type in which the API parameter has no fixed format, the API parameter is matched with terms in a preset segmentation dictionary. In a case where a first string exists in the API parameter, the first string and a second string in the API parameter are extracted as the at least one API parameter term. The first string is a string, which matches at least one term in the segmentation dictionary, in the API parameter, and the second string is a string except the first string in the API parameter.

In a case where the first string does not exist in the API parameter, the second string in the API parameter is extracted as the at least one API parameter term.

The second string may be extracted by means of a regular expression. For example, letters and numbers in strings except the first string in the API parameter are matched by using a regular expression [a-zA-Z0-9]+. The letters are not case-sensitive.

(2) In a case where the API parameter is of a special type, i.e. the type in which the API parameter has a fixed format, certain strings in the API parameter have special meanings, and therefore segmentation can be carried out according to the format of the API parameter.
1. In a case where the format of the API parameter is Internet Protocol (IP) address : port, the IP address and the port are extracted from the API parameter as the at least one API parameter term by taking ":" as a separator.
2. In a case where the format of the API parameter is a domain name, the domain name is taken as the at least one API parameter term.
3. In a case where the format of the API parameter is API parameter 1: Uniform Resource Locator (URL) and API parameter 2: local storage path, a protocol, a domain name or IP address, a port, and a path + file name of the URL in the API parameter 1 are extracted, and the protocol, the domain name or IP address, and the port are taken as the at least one API parameter term. The path + file name is matched with the terms in the preset segmentation dictionary, and in a case where a third string exists in the path + file name, the third string and a fourth string in the path + file name are extracted as the at least one API parameter term. The third string is a string, which matches at least one term in the segmentation dictionary, in the path + file name, and the fourth string is a string except the third string in the path + file name. In a case where the third string does not exist in the path + file name, the fourth string in the path + file name is extracted as the at least one API parameter term.
   The local storage path is matched with the terms in the preset segmentation dictionary, and in a case where a fifth string exists in the local storage path, the fifth string and a sixth string in the local storage path are extracted as the at least one API parameter term. The fifth string is a string, which matches at least one term in the segmentation dictionary, in the local storage path, and the sixth string is a string except the fifth string in the local storage path. In a case where the fifth string does not exist in the local storage path, the sixth string in the local storage path is extracted as the at least one API parameter term.
4. In a case where the format of the API parameter is a process path or process name shell command and the API parameter contains a URL, the URL in the API parameter is extracted, a protocol, a domain name or IP address, a port, a path + file name of the URL are extracted, and the protocol, the domain name or IP address, and the port are taken as the at least one API parameter term. The path + file name is matched with the terms in the preset segmentation dictionary, and in a case where a third string exists in the path + file name, the third string and a fourth string in the path + file name are extracted as the at least one API parameter term. The third string is a string, which matches at least one term in the segmentation dictionary, in the path + file name, and the fourth string is a string except the third string in the path + file name. In a case where the third string does not exist in the path + file name, the fourth string in the path + file name is extracted as the at least one API parameter term.

In a case where the format of the API parameter is a process path or process name shell command and the API parameter contains an IP address, the IP address in the API parameter is extracted as the at least one API parameter term.

In a case where the format of the API parameter is a process path or process name shell command and the API parameter contains IP address : port, the IP address : port in the API parameter is extracted, and the IP address and the port are separated as the at least one API parameter term by taking ":" as a separator.

A parameter in a shell command in a string except a URL, an IP address, and an IP address : port in the API parameter is extracted as the at least one API parameter term. As an exemplary implementation, a regular expression may be used for matching the parameter in the shell command in the string except the URL, the IP address, and the IP address : port in the API parameter. For example, a regular expression (-)[^]+[] indicates to extract at least one non-space string between "-" and "" in the string except the URL, the IP address, and the IP address : port in the API parameter.

5. In a case where the format of the API parameter is a numerical value representing a size, the API parameter is replaced with a first specific string corresponding to a section in which the value of the API parameter falls, and the first specific string is taken as the at least one API parameter term. A value range of the API parameter is divided into at least one section, and values in each section correspond to one first specific string.

In a case where the format of the API parameter is an operation type or attribute, the API parameter is taken as the at least one API parameter term.

In operation 101, whether the software to be detected is malware is determined according to the API sequence of the software to be detected.

In the embodiments of the present disclosure, the operation of determining whether the software to be detected is malware according to the API sequence of the software to be detected includes the following operations.

A feature vector of the software to be detected is determined according to the API sequence of the software to be detected. That is, the API sequence is represented by using a feature vector. For example, the API name and the at least one API parameter term in the API sequence are represented by using predetermined characters.

Whether the software to be detected is malware is determined according to the feature vector of the software to be detected.

The operation of determining whether the software to be detected is malware according to the feature vector of the software to be detected includes the following operations.

The feature vector of the software to be detected is input into a pre-established Support Vector Machine (SVM) model classifier, and a probability that the software to be detected is malware and a probability that the software to be detected is normal software are output by the SVM model classifier.

In a case where the probability that the software to be detected is malware is greater than the probability that the software to be detected is normal software, it is determined that the software to be detected is malware.

In a case where the probability that the software to be detected is malware is smaller than the probability that the software to be detected is normal software, it is determined that the software to be detected is normal software.

In the embodiments of the present disclosure, whether software to be detected is malware is determined based on an API sequence including an API name and at least one API parameter term obtained by segmenting an API parameter, and information in a malicious behavior is fully utilized. Compared with the method in which only an API name sequence is used in the detection or in which the API parameters is hashed as a whole, the method has a better representation effect, effectively avoids interference from random numbers or irregular strings, and improves the detection accuracy by extracting meaningful strings as features for detection.

In some other embodiments of the present disclosure, in a case where the at least one API parameter term includes at least one of a domain name and an IP address, before determining whether the software to be detected is malware according to the API sequence of the software to be detected, the method further includes at least one of the following operations.

The domain name in the API sequence is replaced with a second specific string.

The IP address in the API sequence is replaced with a third specific string.

The domain name in the API sequence is matched with a domain name blacklist and a domain name whitelist. In a case where the domain name in the API sequence is in the domain name blacklist, the domain name in the API sequence is replaced with a second specific string corresponding to the domain name blacklist, such as "NEG_DN". In a case where the domain name in the API sequence is in the domain name whitelist, the domain name in the API sequence is replaced with a second specific string corresponding to the domain name whitelist, such as "POS_DN". In a case where no domain name in the API sequence is in the domain name blacklist or the domain name whitelist, the domain name in the API sequence is replaced with a second specific string corresponding to an unknown domain name, such as "Unknown_DN".

The IP address in the API sequence is matched with an IP address blacklist and an IP address whitelist. In a case where the IP address in the API sequence is in the IP address blacklist, the IP address in the API sequence is replaced with a third specific string corresponding to the IP address blacklist, such as "NEG_IP". In a case where the IP address in the API sequence is in the IP address whitelist, the IP address in the API sequence is replaced with a third specific string corresponding to the IP address whitelist, such as "POS_IP". In a case where no IP address in the API sequence is in the IP address blacklist or the IP address whitelist, the IP address in the API sequence is replaced with a second specific string corresponding to an unknown IP address, such as "Unknown_IP".

In some other embodiments of the present disclosure, before acquiring the API sequence of the software to be detected, the method further includes the following operation.

The SVM model classifier is established.

In the embodiments of the present disclosure, the operation of establishing the SVM model classifier includes the following operations.

Before the sandbox runs any training samples, the following information is taken as terms in a segmentation dictionary: all file paths and file names in the sandbox; all registry keys in the sandbox; suffixes of all file types in the sandbox; specific strings appearing in malicious samples.

Each training sample is sequentially run in the sandbox to acquire the API sequence of each training sample. The API sequence includes an API name and at least one corresponding API parameter term.

Refined terms in the training sample are extracted as terms in the segmentation dictionary.

The API sequences of all the training samples are trained and modeled by using an SVM algorithm to obtain the SVM model classifier. As an exemplary implementation, the API sequences of all the training samples are input into an objective function of the SVM algorithm to solve for parameters of the objective function.

The operation of extracting the refined terms in the training sample as the terms in the segmentation dictionary includes the following operations.

The number of appearances, in all the training samples, of each API parameter term in the API sequences in all training samples is counted, and API parameter terms with the number of appearances in all the training samples greater than or equal to a first preset threshold are put into the segmentation dictionary as the refined terms.

Maximum common string analysis is performed on API parameter terms with the number of appearances in all the training samples smaller than the first preset threshold, and common strings with a length greater than a second preset threshold are put into the segmentation dictionary as the refined terms.

The training samples include normal samples (normal software) and malicious samples (i.e., malware).

A specific string appearing in the malicious sample refers to a string only appearing in a specific malicious software program, and includes at least one of the followings:
special mutex, special file name, special process name, special file path, etc.

The operation of acquiring the API sequence of each training sample includes the following operations.

An API name and an API parameter of each training sample are acquired. The API parameter is segmented to obtain the at least one API parameter term. The API sequence is formed by the API name and the at least one API parameter term.

The manner of segmenting the API parameter to obtain the at least one API parameter term is the same as in the previous embodiment and will not be described in detail herein.

In some other embodiments of the present disclosure, in a case where the at least one API parameter term includes at least one of a domain name and an IP address, before extracting the refined terms in the training sample as the terms in the segmentation dictionary, the method further includes at least one of the following operations.

The domain name in the API sequence is replaced with a second specific string.

The IP address in the API sequence is replaced with a third specific string.

The domain name in the API sequence is matched with a domain name blacklist and a domain name whitelist. In a case where the domain name in the API sequence is in the domain name blacklist, the domain name in the API sequence is replaced with a second specific string corresponding to the domain name blacklist, such as "NEG_DN". In a case where the domain name in the API sequence is in the domain name whitelist, the domain name in the API sequence is replaced with a second specific string corresponding to the domain name whitelist, such as "POS_DN". In a case where no domain name in the API sequence is in the domain name blacklist or the domain name whitelist, the domain name in the API sequence is replaced with a second specific string corresponding to an unknown domain name, such as "Unknown_DN".

The IP address in the API sequence is matched with an IP address blacklist and an IP address whitelist. In a case where the IP address in the API sequence is in the IP address blacklist, the IP address in the API sequence is replaced with a third specific string corresponding to the IP address blacklist, such as "NEG_IP". In a case where the IP address in the API sequence is in the IP address whitelist, the IP address in the API sequence is replaced with a third specific string corresponding to the IP address whitelist, such as "POS_IP". In a case where no IP address in the API sequence is in the IP address blacklist or the IP address whitelist, the IP address in the API sequence is replaced with a second specific string corresponding to an unknown IP address, such as "Unknown_IP".

Referring to Fig. 2, some other embodiments of the present disclosure provides a malware detection device, which includes a sequence acquisition module 201 and a detection module 202.

The sequence acquisition module 201 is configured to run software to be detected in a sandbox, and acquire an API sequence of the software to be detected, wherein the API sequence includes an API name and at least one API parameter term obtained by segmenting a corresponding API parameter.

The detection module 202 is configured to determine whether the software to be detected is malware according to the API sequence of the software to be detected.

In some other embodiments of the present disclosure, the at least one API parameter term has the same order in the API sequence and in the API parameter, thereby ensuring the accuracy of a final detection result.

In some other embodiments of the present disclosure, the sequence acquisition module 201 may be configured to acquire an API sequence of the software to be detected by using the following manners.

The API name and the API parameter of the software to be detected are acquired.

The API parameter is segmented to obtain the at least one API parameter term. The API sequence is formed by the API name and the at least one API parameter term.

For example, the API sequence may be [API name 1, API parameter term 1 of API name 1, API parameter term 2 of API name 1, ..., API name 2, API parameter term 1 of API name 2, API parameter term 2 of API name 2, ...].

In some other embodiments of the present disclosure, the sequence acquisition module 201 may be configured to segment the API parameter to obtain the at least one API parameter term by using the following manners. A segmentation method is determined according to the API name. The API parameter is segmented according to the determined segmentation method to obtain the at least one API parameter term.

The sequence acquisition module 201 may be configured to determine a segmentation method according to the API name by using the following manners.

The segmentation method corresponding to the API name is searched in a preset corresponding relationship between API names and segmentation methods.

Several segmentation methods are described below.
(1) In a case where the API parameter is of a common type, i.e. the type in which the API parameter has no fixed format, the API parameter is matched with terms in a preset segmentation dictionary. In a case where a first string exists in the API parameter, the first string and a second string in the API parameter are extracted as the at least one API parameter term. The first string is a string, which matches at least one term in the segmentation dictionary, in the API parameter, and the second string is a string except the first string in the API parameter.

In a case where the first string does not exist in the API parameter, the second string in the API parameter is extracted as the at least one API parameter term.

The second string may be extracted by means of a regular expression. For example, letters and numbers in strings except the first string in the API parameter are matched by using a regular expression [a-zA-Z0-9]+. The letters are not case-sensitive.

(2) In a case where the API parameter is of a special type, i.e. the type in which the API parameter has a fixed format, certain strings in the API parameter have special meanings, and therefore segmentation can be carried out according to the format of the API parameter.
1. In a case where the format of the API parameter is IP address : port, the IP address and the port are extracted from the API parameter as the at least one API parameter term by taking ":" as a separator.
2. In a case where the format of the API parameter is a domain name, the domain name is taken as the at least one API parameter term.
3. In a case where the format of the API parameter is API parameter 1: Uniform Resource Locator (URL) and API parameter 2: local storage path, a protocol, a domain name or IP address, a port, and a path + file name of the URL in the API parameter 1 are extracted, and the protocol, the domain name or IP address, and the port are taken as the at least one API parameter term. The path + file name is matched with the terms in the preset segmentation dictionary, and in a case where a third string exists in the path + file name, the third string and a fourth string in the path + file name are extracted as the at least one API parameter term. The third string is a string, which matches at least one term in the segmentation dictionary, in the path + file name, and the fourth string is a string except the third string in the path + file name. In a case where the third string does not exist in the path + file name, the fourth string in the path + file name is extracted as the at least one API parameter term.
   The local storage path is matched with the terms in the preset segmentation dictionary, and in a case where a fifth string exists in the local storage path, the fifth string and a sixth string in the local storage path are extracted as the at least one API parameter term. The fifth string is a string, which matches at least one term in the segmentation dictionary, in the local storage path, and the sixth string is a string except the fifth string in the local storage path. In a case where the fifth string does not exist in the local storage path, the sixth string in the local storage path is extracted as the at least one API parameter term.
4. In a case where the format of the API parameter is a process path or process name shell command and the API parameter contains a URL, the URL in the API parameter is extracted, a protocol, a domain name or IP address, a port, a path + file name of the URL are extracted, and the protocol, the domain name or IP address, and the port are taken as the at least one API parameter term. The path + file name is matched with the terms in the preset segmentation dictionary, and in a case where a third string exists in the path + file name, the third string and a fourth string in the path + file name are extracted as the at least one API parameter term. The third string is a string, which matches at least one term in the segmentation dictionary, in the path + file name, and the fourth string is a string except the third string in the path + file name. In a case where the third string does not exist in the path + file name, the fourth string in the path + file name is extracted as the at least one API parameter term.

In a case where the format of the API parameter is a process path or process name shell command and the API parameter contains an IP address, the IP address in the API parameter is extracted as the at least one API parameter term.

In a case where the format of the API parameter is a process path or process name shell command and the API parameter contains IP address : port, the IP address : port in the API parameter is extracted, and the IP address and the port are separated as the at least one API parameter term by taking ":" as a separator.

A parameter in a shell command in a string except a URL, an IP address, and an IP address : port in the API parameter is extracted as the at least one API parameter term. As an exemplary implementation, a regular expression may be used for matching the parameter in the shell command in the string except the URL, the IP address, and the IP address : port in the API parameter. For example, a regular expression (-)[^]+[] indicates to extract at least one non-space string between "-" and "" in the string except the URL, the IP address, and the IP address : port in the API parameter.

5. In a case where the format of the API parameter is a numerical value representing a size, the API parameter is replaced with a first specific string corresponding to a section in which the value of the API parameter falls, and the first specific string is taken as the at least one API parameter term. A value range of the API parameter is divided into at least one section, and values in each section correspond to one first specific string.

In a case where the format of the API parameter is an operation type or attribute, the API parameter is taken as the at least one API parameter term.

In the embodiments of the present disclosure, the detection module 202 may be configured to:
determine a feature vector of the software to be detected according to the API sequence of the software to be detected, i.e. represent the API sequence by using a feature vector, e.g. represent the API name and the at least one API parameter term in the API sequence by using predetermined characters; and
determine whether the software to be detected is malware according to the feature vector of the software to be detected.

The detection module 202 may be configured to determine whether the software to be detected is malware according to the feature vector of the software to be detected by using the following manners.

The feature vector of the software to be detected is input into a pre-established SVM model classifier, and a probability that the software to be detected is malware and a probability that the software to be detected is normal software are output by the SVM model classifier.

In a case where the probability that the software to be detected is malware is greater than the probability that the software to be detected is normal software, it is determined that the software to be detected is malware.

In a case where the probability that the software to be detected is malware is smaller than the probability that the software to be detected is normal software, it is determined that the software to be detected is normal software.

In the embodiments of the present disclosure, whether software to be detected is malware is determined based on an API sequence including an API name and at least one API parameter term obtained by segmenting an API parameter, and information in a malicious behavior is fully utilized. Compared with the method in which only an API name sequence is used in the detection or in which the API parameters is hashed as a whole, the solution has a better representation effect, effectively avoids interference from random numbers or irregular strings, and improves the detection accuracy by extracting meaningful strings as features for detection.

In some other embodiments of the present disclosure, the sequence acquisition module 201 is further configured to:
execute, in a case where the at least one API parameter term includes at least one of a domain name and an IP address, at least one of the following:
replacing the domain name in the API sequence with a second specific string; and
replacing the IP address in the API sequence with a third specific string.

The domain name in the API sequence is matched with a domain name blacklist and a domain name whitelist. In a case where the domain name in the API sequence is in the domain name blacklist, the domain name in the API sequence is replaced with a second specific string corresponding to the domain name blacklist, such as "NEG_DN". In a case where the domain name in the API sequence is in the domain name whitelist, the domain name in the API sequence is replaced with a second specific string corresponding to the domain name whitelist, such as "POS_DN". In a case where no domain name in the API sequence is in the domain name blacklist or the domain name whitelist, the domain name in the API sequence is replaced with a second specific string corresponding to an unknown domain name, such as "Unknown_DN".

The IP address in the API sequence is matched with an IP address blacklist and an IP address whitelist. In a case where the IP address in the API sequence is in the IP address blacklist, the IP address in the API sequence is replaced with a third specific string corresponding to the IP address blacklist, such as "NEG_IP". In a case where the IP address in the API sequence is in the IP address whitelist, the IP address in the API sequence is replaced with a third specific string corresponding to the IP address whitelist, such as "POS_IP". In a case where no IP address in the API sequence is in the IP address blacklist or the IP address whitelist, the IP address in the API sequence is replaced with a second specific string corresponding to an unknown IP address, such as "Unknown_IP".

In some other embodiments of the present disclosure, the device further includes a classifier establishment module 203.

The classifier establishment module 203 is configured to establish the SVM model classifier.

In the embodiments of the present disclosure, the classifier establishment module 203 may be configured to:
take, before the sandbox runs any training samples, the following information as terms in a segmentation dictionary: all file paths and file names in the sandbox; all registry keys in the sandbox; suffixes of all file types in the sandbox; specific strings appearing in malicious samples;
sequentially run each training sample in the sandbox to acquire the API sequence of each training sample, wherein the API sequence includes an API name and at least one corresponding API parameter term;
extract refined terms in the training sample as terms in the segmentation dictionary; and
train and model the API sequences of all the training samples by using an SVM algorithm to obtain the SVM model classifier.

The classifier establishment module 203 may be configured to extract the refined terms in the training sample as terms in the segmentation dictionary by using the following manners.

The number of appearances, in all the training samples, of each API parameter term in the API sequences in all training samples is counted, and API parameter terms with the number of appearances in all the training samples greater than or equal to a first preset threshold are put into the segmentation dictionary as the refined terms.

Maximum common string analysis is performed on API parameter terms with the number of appearances in all the training samples smaller than the first preset threshold, and common strings with a length greater than a second preset threshold are put into the segmentation dictionary as the refined terms.

The training samples include normal samples (normal software) and malicious samples (i.e., malware).

A specific string appearing in the malicious sample refers to a string only appearing in a specific malicious software program, and includes at least one of the followings.
special mutex, special file name, special process name, special file path, etc.

The classifier establishment module 203 may be configured to acquire the API sequence of each training sample by using the following manners.

An API name and an API parameter of each training sample are acquired. The API parameter is segmented to obtain the at least one API parameter term. The API sequence is formed by the API name and the at least one API parameter term.

The manner of segmenting the API parameter to obtain the at least one API parameter term is the same as in the previous embodiment and will not be described in detail herein.

In some other embodiments of the present disclosure, the classifier establishment module 203 is further configured to:
execute, in a case where the at least one API parameter term includes at least one of a domain name and an IP address, at least one of the following:
replacing the domain name in the API sequence with a second specific string; and
replacing the IP address in the API sequence with a third specific string.

The domain name in the API sequence is matched with a domain name blacklist and a domain name whitelist. In a case where the domain name in the API sequence is in the domain name blacklist, the domain name in the API sequence is replaced with a second specific string corresponding to the domain name blacklist, such as "NEG_DN". In a case where the domain name in the API sequence is in the domain name whitelist, the domain name in the API sequence is replaced with a second specific string corresponding to the domain name whitelist, such as "POS_DN". In a case where no domain name in the API sequence is in the domain name blacklist or the domain name whitelist, the domain name in the API sequence is replaced with a second specific string corresponding to an unknown domain name, such as "Unknown_DN".

The IP address in the API sequence is matched with an IP address blacklist and an IP address whitelist. In a case where the IP address in the API sequence is in the IP address blacklist, the IP address in the API sequence is replaced with a third specific string corresponding to the IP address blacklist, such as "NEG_IP". In a case where the IP address in the API sequence is in the IP address whitelist, the IP address in the API sequence is replaced with a third specific string corresponding to the IP address whitelist, such as "POS_IP". In a case where no IP address in the API sequence is in the IP address blacklist or the IP address whitelist, the IP address in the API sequence is replaced with a second specific string corresponding to an unknown IP address, such as "Unknown_IP".

Some other embodiments of the present disclosure provide a malware detection device, which includes a processor and a computer-readable storage medium having stored therein instructions that, when executed by the processor, implement any of the malware detection methods described above.

Some other embodiments of the present disclosure provide a computer-readable storage medium, which has stored thereon computer programs that, when executed by a processor, implement the operations of any of the malware detection methods described above.

Those having ordinary skill in the art will appreciate that all or some of the operations in the methods disclosed above, and functional modules/units in systems and devices may be implemented as software, firmware, hardware, and suitable combinations thereof. In a hardware implementation, the partitioning between functional modules/units mentioned in the above description does not necessarily correspond to the partitioning of physical components; for example, one physical component may have multiple functions, or one function or operation may be performed by several physical components in cooperation. Some or all of the components may be implemented as software executed by a processor, such as a digital signal processor, or a microprocessor, or as hardware, or as an integrated circuit, such as an application specific integrated circuit. Such software may be distributed over a computer readable medium, which may include computer storage media (or non-transitory media) and communication media (or transitory media). As is well known to those of ordinary skill in the art, the term computer storage media includes volatile and nonvolatile, removable and non-removable media implemented in any method or technology for storage of information (such as computer readable instructions, data structures, program modules or other data). The computer storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other media which may be used to store the desired information and accessed by a computer. In addition, as is well known to those of ordinary skill in the art, the communication media typically include computer readable instructions, data structures, program modules, or other data in a modulated data signal such as a carrier wave or other transport mechanism and may include any information delivery media.

Although the embodiments of the present disclosure disclose the above implementations, the content is only the implementations adopted for convenience of understanding the embodiments of the present disclosure, and is not intended to limit the embodiments of the present disclosure. Any person having ordinary skill in the art to which the embodiments of the present disclosure pertain may make modifications and variations in implementation forms and details without departing from the scope of the embodiments of the present disclosure, but the scope of patent protection of the embodiments of the present disclosure should still be determined by the scope of the appended claims.

## Claims

1. A malware detection method, comprising:
running (100) software to be detected in a sandbox, and acquiring (100) an Application Programming Interface, API, sequence of the software to be detected, wherein the API sequence comprises an API name and at least one API parameter term obtained by segmenting a corresponding API parameter; and
determining (101) whether the software to be detected is malware according to the API sequence of the software to be detected;
wherein in a case where the at least one API parameter term comprises at least one of a domain name and an Internet Protocol, IP, address, before determining (101) whether the software to be detected is malware according to the API sequence of the software to be detected, the method further comprises at least one of the following:
replacing the domain name in the API sequence with a second specific string; and
replacing the IP address in the API sequence with a third specific string.

2. The malware detection method according to claim 1, wherein the at least one API parameter term has the same order in the API sequence and in the API parameter.

3. The malware detection method according to claim 1, wherein acquiring (100) the API sequence of the software to be detected comprises:
acquiring the API name and the API parameter of the software to be detected; and
segmenting the API parameter to obtain the at least one API parameter term, wherein the API sequence is formed by the API name and the at least one API parameter term.

4. The malware detection method according to claim 3, wherein segmenting the API parameter to obtain the at least one API parameter term comprises:
determining a segmentation method according to the API name; and
segmenting the API parameter according to the determined segmentation method to obtain the at least one API parameter term.

5. The malware detection method according to claim 4, wherein determining the segmentation method according to the API name comprises:
searching for the segmentation method corresponding to the API name of the software to be detected in a preset corresponding relationship between API names and segmentation methods.

6. The malware detection method according to claim 4, wherein segmenting the API parameter according to the determined segmentation method to obtain the at least one API parameter term comprises at least one of the following:
matching the API parameter with terms in a preset segmentation dictionary; in a case where a first string exists in the API parameter, extracting the first string and a second string in the API parameter as the at least one API parameter term, wherein the first string is a string, which matches at least one term in the segmentation dictionary, in the API parameter, and the second string is a string except the first string in the API parameter; in a case where the first string does not exist in the API parameter, extracting the second string in the API parameter as the at least one API parameter term; and
segmenting according to a format of the API parameter.

7. The malware detection method according to claim 6, wherein segmenting according to the format of the API parameter comprises at least one of the following:
in a case where the format of the API parameter is IP address : port, extracting the IP address and the port from the API parameter as the at least one API parameter term by taking ":" as a separator;
in a case where the format of the API parameter is a domain name, taking the domain name as the at least one API parameter term;
in a case where the format of the API parameter is API parameter 1: Uniform Resource Locator, URL, and API parameter 2: local storage path, extracting a protocol, a domain name or IP address, a port, and a path + file name of the URL in the API parameter 1, and taking the protocol, the domain name or IP address, and the port as the at least one API parameter term; matching the path + file name with the terms in the preset segmentation dictionary, and in a case where a third string exists in the path + file name, extracting the third string and a fourth string in the path + file name as the at least one API parameter term, wherein the third string is a string, which matches at least one term in the segmentation dictionary, in the path + file name, and the fourth string is a string except the third string in the path + file name; in a case where the third string does not exist in the path + file name, extracting the fourth string in the path + file name as the at least one API parameter term; matching the local storage path with the terms in the preset segmentation dictionary, and in a case where a fifth string exists in the local storage path, extracting the fifth string and a sixth string in the local storage path as the at least one API parameter term, wherein the fifth string is a string, which matches at least one term in the segmentation dictionary, in the local storage path, and the sixth string is a string except the fifth string in the local storage path; in a case where the fifth string does not exist in the local storage path, extracting the sixth string in the local storage path as the at least one API parameter term;
in a case where the format of the API parameter is a process path or process name shell command and the API parameter contains a URL, extracting the URL in the API parameter, extracting a protocol, a domain name or IP address, a port, a path + file name of the URL, and taking the protocol, the domain name or IP address, and the port as the at least one API parameter term; matching the path + file name with the terms in the preset segmentation dictionary, and in a case where a third string exists in the path + file name, extracting the third string and a fourth string in the path + file name as the at least one API parameter term, wherein the third string is a string, which matches at least one term in the segmentation dictionary, in the path + file name, and the fourth string is a string except the third string in the path + file name; in a case where the third string does not exist in the path + file name, extracting the fourth string in the path + file name as the at least one API parameter term;
in a case where the format of the API parameter is a process path or process name shell command and the API parameter contains an IP address, extracting the IP address in the API parameter as the at least one API parameter term;
in a case where the format of the API parameter is a process path or process name shell command and the API parameter contains IP address : port, extracting the IP address : port in the API parameter, and separating the IP address and the port as the at least one API parameter term by taking ":" as a separator;
extracting a parameter in a shell command in a string except a URL, an IP address, and an IP address : port in the API parameter as the at least one API parameter term;
in a case where the format of the API parameter is a numerical value representing a size, replacing the API parameter with a first specific string corresponding to a section in which the value of the API parameter falls, and taking the first specific string as the at least one API parameter term, wherein a value range of the API parameter is divided into at least one section, and values in each section correspond to one first specific string; and
in a case where the format of the API parameter is an operation type or attribute, taking the API parameter as the at least one API parameter term.

8. The malware detection method according to claim 1, wherein determining (101) whether the software to be detected is malware according to the API sequence of the software to be detected comprises:
determining a feature vector of the software to be detected according to the API sequence of the software to be detected; and
determining whether the software to be detected is malware according to the feature vector of the software to be detected.

9. The malware detection method according to claim 8, wherein determining whether the software to be detected is malware according to the feature vector of the software to be detected comprises:
inputting the feature vector of the software to be detected into a pre-established Support Vector Machine, SVM, model classifier, and outputting a probability that the software to be detected is malware and a probability that the software to be detected is normal software by the SVM model classifier;
in a case where the probability that the software to be detected is malware is greater than the probability that the software to be detected is normal software, determining that the software to be detected is malware; and
in a case where the probability that the software to be detected is malware is smaller than the probability that the software to be detected is normal software, determining that the software to be detected is normal software.

10. The malware detection method according to claim 9, before acquiring (100) the API sequence of the software to be detected, the method further comprising:
establishing the SVM model classifier, wherein establishing the SVM model classifier comprises:
before the sandbox runs any training samples, taking the following information as terms in a segmentation dictionary: all file paths and file names in the sandbox; all registry keys in the sandbox; suffixes of all file types in the sandbox; specific strings appearing in malicious samples;
sequentially running each training sample in the sandbox to acquire the API sequence of each training sample, wherein the API sequence comprises an API name and at least one corresponding API parameter term;
extracting refined terms in the training sample as terms in the segmentation dictionary; and
training and modeling the API sequences of all the training samples by using an SVM algorithm to obtain the SVM model classifier.

11. The malware detection method according to claim 10, wherein in a case where the at least one API parameter term comprises at least one of a domain name and an IP address, before extracting the refined terms in the training sample as the terms in the segmentation dictionary, the method further comprises at least one of the following:
replacing the domain name in the API sequence with a second specific string; and
replacing the IP address in the API sequence with a third specific string.

12. The malware detection method according to claim 10 or 11, wherein extracting the refined terms in the training sample as the terms in the segmentation dictionary comprises:
counting the number of appearances, in all the training samples, of each API parameter term in the API sequences in all training samples, and putting API parameter terms with the number of appearances in all the training samples greater than or equal to a first preset threshold into the segmentation dictionary as the refined terms; and
performing maximum common string analysis on API parameter terms with the number of appearances in all the training samples smaller than the first preset threshold, and putting common strings with a length greater than a second preset threshold into the segmentation dictionary as the refined terms.

13. A malware detection device, comprising means for implementing the malware detection method according to any one of claims 1 to 12.

14. A computer-readable storage medium, having stored thereon computer programs that, when executed by a processor, implement the operations of the malware detection method according to any one of claims 1 to 12.

## Patentansprüche

1. Verfahren zur Erkennung eines Schadprogramms, umfassend:
Ausführen (100) einer zu erkennenden Software in einer Sandbox und Erfassen (100) einer Anwendungsprogrammierungsschnittstelle, API, Sequenz der zu erkennenden Software, wobei die API-Sequenz einen API Namen und mindestens einen API Parameterbegriff umfasst, der durch Segmentieren eines entsprechenden API Parameters erhalten wird; und
Bestimmen (101), ob die zu erkennende Software ein Schadprogramm ist nach der API-Sequenz der zu erkennenden Software;
wobei in einem Fall, wenn der mindestens eine API Parameterbegriff mindestens einen Domainnamen und eine Internetprotokoll, IP, Adresse umfasst, vor Bestimmen (101), ob die zu erkennende Software ein Schadprogramm ist, nach der API Sequenz der zu erkennenden Software, das Verfahren ferner mindestens eine der folgenden umfasst:
Ersetzen des Domainnamens in der API Sequenz durch eine zweite spezifische Kette; und Ersetzen der IP-Adresse in der API Sequenz durch eine dritte spezifische Kette.

2. Verfahren zur Erkennung eines Schadprogramms nach Anspruch 1, wobei der mindestens eine API Parameterbegriff dieselbe Reihenfolge in der API Sequenz und in dem API Parameter aufweist.

3. Verfahren zur Erkennung eines Schadprogramms nach Anspruch 1, wobei Erfassen (100) der API-Sequenz der zu erkennenden Software umfasst:
Erfassen des API Namens und des API Parameters der zu erkennenden Software; und
Segmentieren des API Parameter, um mindestens einen API Parameterbegriff zu erhalten, wobei die API Sequenz durch den API Namen und den mindestens einen API Parameterbegriff gebildet wird.

4. Verfahren zur Erkennung eines Schadprogramms nach Anspruch 3, wobei Segmentieren des API Parameters, um mindestens einen API Parameterbegriff zu erhalten, umfasst:
Bestimmen eines Segmentierungsverfahrens nach dem API-Namen; und
Segmentieren des API-Parameters nach dem bestimmten Segmentierungsverfahren, um mindestens einen API Parameterbegriff zu erhalten.

5. Verfahren zur Erkennung eines Schadprogramms nach Anspruch 4, wobei Bestimmen des Segmentierungsverfahrens nach dem API Namen umfasst:
Suchen des Segmentierungsverfahrens, das dem API Namen der zu erkennenden Software in einer voreingestellten entsprechenden Beziehung zwischen AP -Namen und Segmentierungsverfahren entspricht.

6. Verfahren zur Erkennung eines Schadprogramms nach Anspruch 4, wobei Segmentieren des API Parameters nach dem bestimmten Segmentierungsverfahren, um mindestens einen API Parameterbegriff zu erhalten, mindestens einen der folgenden umfasst:
Übereinstimmen des API Parameters mit Begriffen in einem voreingestellten Segmentierungsverzeichnis; in einem Fall, wenn eine erste Kette in dem API Parameter vorhanden ist, Extrahieren der ersten Kette und einer zweiten Kette in dem API Parameter als den mindestens einen API Parameterbegriff, wobei die erste Kette eine Kette ist, die mit mindestens einem Begriff in dem Segmentierungsverzeichnis übereinstimmt, und die zweite Kette eine Kette abgesehen von der ersten Kette ist; in einem Fall, wenn die erste Kette in dem API Parameter nicht vorhanden ist, Extrahieren der zweiten Kette in dem API Parameter als den mindestens einen API Parameterbegriff; und
Segmentieren nach einem Format des API Parameters.

7. Verfahren zur Erkennung eines Schadprogramms nach Anspruch 6, wobei Segmentieren nach dem Format des API Parameters mindestens eine der folgenden umfasst:
in einem Fall, wenn das Format des API Parameters IP-Adresse Port ist, Extrahieren der IP-Adresse und des Ports aus dem API Parameter als den mindestens einen API-Parameterbegriff, wobei ":" als Trennzeichen verwendet wird;
in einem Fall, wenn das Format des API Parameters ein Domainname ist, Verwenden des Domainnamens als den mindestens einen API Parameterbegriff;
falls das Format des API Parameters API Parameter 1: Uniform Ressource Locator, URL, und API Parameter 2: lokaler Speicherpfad ist, Extrahieren eines Protokolls, eines Domainnamens oder einer IP-Adresse, eines Ports sowie eines Pfads + Dateinamens der URL in dem API Parameter 1 und Verwenden des Protokolls, des Domainnamens oder der IP-Adresse und des Ports als den mindestens einen API Parameterbegriff; Übereinstimmen des Pfads + Dateinamens mit den Begriffen in dem voreingestellten Segmentierungsverzeichnis, und in einem Fall, wenn eine dritte Kette im Pfad + Dateinamen vorhanden ist, Extrahieren der dritten Kette und einer vierten Kette in dem Pfad + Dateinamen als den mindestens einen API Parameterbegriff, wobei die dritte Kette eine Kette ist, die mit mindestens einem Begriff in dem Segmentierungsverzeichnis, in dem Pfad+ Dateinamen übereinstimmt, und die vierte Kette eine Kette abgesehen von der dritten Kette ist; in einem Fall, wenn die dritte Kette in dem Pfad + Dateinamen nicht vorhanden ist, Extrahieren der vierten Kette in dem Pfad + Dateinamen als den mindestens einen API Parameterbegriff; Übereinstimmen des lokalen Speicherpfads mit den Begriffen in dem voreingestellten Segmentierungsverzeichnis, und in einem Fall, wenn eine ftinfte Kette in dem lokalen Speicherpfad vorhanden ist, Extrahieren der fünften Kette und einer sechsten Kette in dem lokalen Speicherpfad als den mindestens einen API Parameterbegriff, wobei die fünfte Kette eine Kette ist, die mit mindestens einem Begriff in dem Segmentierungsverzeichnis übereinstimmt, und die sechste Kette eine Kette abgesehen von der fünften Kette ist; in einem Fall, wenn die fünfte Kette in dem lokalen Speicherpfad nicht vorhanden ist, Extrahieren der sechsten Kette in dem lokalen Speicherpfad als den mindestens einen API Parameterbegriff;
in einem Fall, wenn das Format des API Parameters ein Prozesspfad oder ein Prozessnamenshellbefehl ist und der API-Parameter eine URL enthält, Extrahieren der URL in dem API-Parameter, Extrahieren eines Protokolls, eines Domainnamens oder einer IP-Adresse, eines Ports, eines Pfads + Dateinamens der URL und Verwenden des Protokolls, des Domainnamens oder der IP-Adresse und des Ports als den mindestens einen API-Parameterbegriff; Übereinstimmen des Pfads + Dateinamens mit den Begriffen in dem voreingestellten Segmentierungsverzeichnis, und in einem Fall, wenn eine dritte Kette in dem Pfad + Dateinamen vorhanden ist, Extrahieren der dritten Kette und einer vierten Kette in dem Pfad + Dateinamen als den mindestens einen API Parameterbegriff, wobei die dritte Kette eine Zeichenkette ist, die mit mindestens einem Begriff in dem Segmentierungsverzeichnis übereinstimmt, und die vierte Kette eine Kette abgesehen von der dritten Kette in dem Pfad + Dateinamen ist; in einem Fall, wenn die dritte Kette in dem Pfad + Dateinamen nicht vorhanden ist, Extrahieren der vierten Kette in dem Pfad + Dateinamen als den mindestens einen API Parameterbegriff;
in einem Fall, wenn das Format des API Parameters ein Prozesspfad oder ein Prozessnamenshellbefehl ist und der API Parameter eine IP Adresse enthält, Extrahieren der IP Adresse in dem API Parameter als den mindestens einen API Parameterbegriff;
in einem Fall, wenn das Format des API Parameters ein Prozesspfad oder ein Prozessnamenshellbefehl ist und der API Parameter IP-Adresse : Port enthält, Extrahieren der IP-Adresse : Port in dem API-Parameter und Trennen der IP-Adresse und des Ports als den mindestens einen API-Parameterbegriff, indem ":" als Trennzeichen verwendet wird;
Extrahieren eines Parameters in einem Shellbefehl in einer Kette abgesehen von URL, IP-Adresse oder IP-Adresse : Port in dem API Parameter als den mindestens einen API Parameterbegriff;
in einem Fall, wenn das Format des API-Parameters ein numerischer Wert ist, der eine Größe darstellt, Ersetzen des API Parameters durch eine erste spezifische Kette, die einem Abschnitt entspricht, in den der Wert des API Parameters sinkt, und Verwenden der ersten spezifischen Kette als den mindestens einen API Parameterbegriff,
wobei ein Wertebereich des API Parameters in mindestens einen Abschnitt unterteilt wird, und Werte in jedem Abschnitt einer ersten spezifischen Kette entsprechen; und
in einem Fall, wenn das Format des API-Parameters ein Vorgangstyp oder ein Attribut ist, Verwenden des API Parameters als den mindestens einen API Parameterbegriff.

8. Verfahren zur Erkennung eines Schadprogramms nach Anspruch 1, wobei Bestimmen (101), ob die zu erkennende Software ein Schadprogramm ist nach der API-Sequenz der zu erkennenden Software umfasst:
Bestimmen eines Merkmalsvektors der zu erkennenden Software nach der API-Sequenz der zu erkennenden Software; und
Bestimmen, ob die zu erkennende Software ein Schadprogramm ist nach dem Merkmalsvektor der zu erkennenden Software.

9. Verfahren zur Erkennung eines Schadprogramms nach Anspruch 8, wobei Bestimmen, ob die zu erkennende Software ein Schadprogramm ist nach dem Merkmalsvektor der zu erkennenden Software umfasst:
Eingeben des Merkmalsvektors der zu erkennenden Software in einen vorab erstellten Support-Vektor-Maschine, SVM, Modell-Klassifikator und Ausgeben einer Wahrscheinlichkeit, dass die zu erkennende Software ein Schadprogramm ist, und einer Wahrscheinlichkeit, dass die zu erkennende Software eine normale Software ist, durch den SVM-Modell-Klassifikator;
in einem Fall, wenn die Wahrscheinlichkeit, dass die zu erkennende Software ein Schadprogramm ist, größer als die Wahrscheinlichkeit ist, dass die zu erkennende Software eine normale Software ist, Bestimmen, dass die zu erkennende Software ein Schadprogramm ist; und
in einem Fall, wenn die Wahrscheinlichkeit, dass die zu erkennende Software ein Schadprogramm ist, kleiner als die Wahrscheinlichkeit ist, dass die zu erkennende Software eine normale Software ist, Bestimmen, dass die zu erkennende Software eine normale Software ist.

10. Verfahren zur Erkennung eines Schadprogramms nach Anspruch 9, wobei vor Erfassen (100) der API-Sequenz der zu erkennenden Software das Verfahren ferner umfasst:
Erstellen des SVM-Modell-Klassifikators, wobei Erstellen des SVM-Modell-Klassifikators umfasst:
vor die Sandbox Ausbildungsproben ausführt, Verwenden der folgenden Informationen als Begriffe in einem Segmentierungsverzeichnis: alle Dateipfade und Dateinamen in der Sandbox; alle Registrierungsschlüssel in der Sandbox; Suffixe aller Dateitypen in der Sandbox; spezifische Ketten, die in schädlichen Proben erscheinen;
Ausführen sequentiell jeder Ausbildungsprobe in der Sandbox zum Erfassen der API Sequenz jeder Ausbildungsprobe, wobei die API Sequenz einen API Namen und mindestens einen entsprechenden API Parameterbegriff umfasst;
Extrahieren verfeinerter Begriffe in der Ausbildungsprobe als Begriffe in dem Segmentierungsverzeichnis; und
Ausbilden und Modellieren der API Sequenzen aller Trainingsproben, indem ein SVM-Algorithmus verwendet wird, um den SVM-Modell Klassifikators erhalten wird.

11. Verfahren zur Erkennung eines Schadprogramms nach Anspruch 10, wobei, in einem Fall, wenn der mindestens eine API-Parameterbegriff mindestens einen Domainnamen und eine IP-Adresse umfasst, vor Extrahieren der verfeinerten Begriffe in der Ausbildungsprobe als Begriffe in dem Segmentierungsverzeichnis, das Verfahren ferner mindestens eine der folgenden umfasst:
Ersetzen des Domainnamens in der API Sequenz durch eine zweite spezifische Kette; und Ersetzen der IP Adresse in der API Sequenz durch eine dritte spezifische Kette.

12. Verfahren zur Erkennung eines Schadprogramms nach Anspruch 10 oder 11, wobei Extrahieren der verfeinerten Begriffe in der Ausbildungsprobe als Begriffe in dem Segmentierungsverzeichnis umfasst:
Berechnen der Anzahl von Erscheinen, in allen Ausbildungsproben, jedes API-Parameterbegriffs in den API-Sequenzen und Einfügen der API-Parameterbegriffe mit der Anzahl von Erscheinen in allen Ausbildungsproben, die größer oder gleich einem ersten voreingestellten Schwellenwert ist, in das Segmentierungsverzeichnis als verfeinerte Begriffe; und
Durchführen einer maximalen gemeinsamen Kettenanalyse auf API Parameterbegriffe mit der Anzahl von Erscheinen in allen Ausbildungsproben kleiner als dem ersten voreingestellten Schwellenwert und Einfügen gemeinsamer Ketten mit einer Länge, die größer als einem zweiten voreingestellten Schwellenwert ist, in das Segmentierungsverzeichnis als verfeinerte Begriffe.

13. Vorrichtung zur Erkennung eines Schadprogramms, umfassend Mittel zur Implementierung des Verfahrens zur Erkennung eines Schadprogramms nach einem der Ansprüche 1 bis 12.

14. Computerlesbares Speichermedium aufweisend darauf gespeicherten Computerprogramme, die, wenn sie von einem Prozessor ausgeführt werden, die Vorgänge des Verfahrens zur Erkennung eines Schadprogramms nach einem der Ansprüche 1 bis 12 implementieren.

## Revendications

1. Procédé de détection de logiciels malveillants, comprenant :
l'exécution (100) d'un logiciel à détecter dans un bac à sable, et l'acquisition (100) d'une séquence d'interface de programmation d'application, API, du logiciel à détecter, la séquence d'API comprenant un nom d'API et au moins un terme de paramètre d'API obtenu par segmentation d'un paramètre d'API correspondant ; et
la détermination (101) de si le logiciel à détecter est un logiciel malveillant selon la séquence d'API du logiciel à détecter ;
dans le cas où ledit au moins un terme de paramètre d'API comprend au moins un nom de domaine et une adresse de protocole Internet, IP, avant la détermination (101) de si le logiciel à détecter est un logiciel malveillant selon la séquence d'API du logiciel à détecter, le procédé comprend en outre au moins une des opérations suivantes :
le remplacement du nom de domaine dans la séquence d'API par une seconde chaîne spécifique ; et
le remplacement de l'adresse IP dans la séquence d'API par une troisième chaîne spécifique.

2. Le procédé de détection de logiciels malveillants selon la revendication 1, dans lequel ledit au moins un terme de paramètre d'API a le même ordre dans la séquence d'API et dans le paramètre d'API.

3. Le procédé de détection de logiciels malveillants selon la revendication 1, dans lequel l'acquisition (100) de la séquence d'API du logiciel à détecter comprend :
l'acquisition du nom d'API et du paramètre d'API du logiciel à détecter ; et
la segmentation du paramètre d'API pour obtenir ledit au moins un terme de paramètre d'API, la séquence d'API étant formée par le nom d'API et ledit au moins un terme de paramètre d'API.

4. Le procédé de détection de logiciels malveillants selon la revendication 3, dans lequel la segmentation du paramètre d'API pour obtenir ledit au moins un terme de paramètre d'API comprend :
la détermination d'une méthode de segmentation selon le nom d'API ; et
la segmentation du paramètre d'API selon la méthode de segmentation déterminée pour obtenir ledit au moins un terme de paramètre d'API.

5. Le procédé de détection de logiciels malveillants selon la revendication 4, dans lequel la détermination de la méthode de segmentation selon le nom d'API comprend :
la recherche de la méthode de segmentation correspondant au nom d'API du logiciel à détecter dans une relation de correspondance prédéfinie entre des noms d'API et des méthodes de segmentation.

6. Le procédé de détection de logiciels malveillants selon la revendication 4, dans lequel la segmentation du paramètre d'API selon la méthode de segmentation déterminée pour obtenir ledit au moins un terme de paramètre d'API comprend au moins une des opérations suivantes :
la mise en correspondance du paramètre d'API avec des termes dans un dictionnaire de segmentation prédéfini ; dans le cas où une première chaîne existe dans le paramètre d'API, l'extraction de la première chaîne et d'une seconde chaîne dans le paramètre d'API en tant que ledit au moins un terme de paramètre d'API, la première chaîne étant une chaîne correspondant à au moins un terme du dictionnaire de segmentation dans le paramètre d'API, et la seconde chaîne étant une chaîne autre que la première chaîne dans le paramètre d'API ; dans le cas où la première chaîne n'existe pas dans le paramètre d'API, l'extraction de la seconde chaîne dans le paramètre d'API en tant que ledit au moins un terme de paramètre d'API ; et
la segmentation selon un format du paramètre d'API.

7. Le procédé de détection de logiciels malveillants selon la revendication 6, dans lequel la segmentation selon le format du paramètre d'API comprend au moins une des opérations suivantes :
dans le cas où le format du paramètre d'API est adresse IP : port, l'extraction de l'adresse IP et du port à partir du paramètre d'API comme ledit au moins un terme de paramètre d'API en prenant « : » comme séparateur ;
dans le cas où le format du paramètre d'API est un nom de domaine, la prise du nom de domaine en tant que ledit au moins un terme de paramètre d'API ;
dans le cas où le format du paramètre d'API est paramètre d'API 1 : localisateur uniforme de ressource, URL, et paramètre d'API 2 : chemin de stockage local, l'extraction d'un protocole, d'un nom de domaine ou d'une adresse IP, d'un port, et d'un chemin + nom de fichier de l'URL dans le paramètre d'API 1, et la prise du protocole, du nom de domaine ou de l'adresse IP, et du port en tant que ledit au moins un terme de paramètre d'API ; la mise en correspondance du chemin + nom de fichier avec les termes dans le dictionnaire de segmentation prédéfini, et dans le cas où une troisième chaîne existe dans le chemin + nom de fichier, l'extraction de la troisième chaîne et d'une quatrième chaîne dans le chemin + nom de fichier en tant que ledit au moins un terme de paramètre d'API, la troisième chaîne étant une chaîne correspondant à au moins un terme du dictionnaire de segmentation dans le chemin + nom de fichier, et la quatrième chaîne étant une chaîne autre que la troisième chaîne dans le chemin + nom de fichier ; dans le cas où la troisième chaîne n'existe pas dans le chemin + nom de fichier, l'extraction de la quatrième chaîne dans le chemin + nom de fichier en tant que ledit au moins un terme de paramètre d'API ; la mise en correspondance du chemin de stockage local avec les termes dans le dictionnaire de segmentation prédéfini, et dans le cas où une cinquième chaîne existe dans le chemin de stockage local, l'extraction de la cinquième chaîne et d'une sixième chaîne dans le chemin de stockage local en tant que ledit au moins un terme de paramètre d'API, la cinquième chaîne étant une chaîne correspondant à au moins un terme du dictionnaire de segmentation dans le chemin de stockage local, et la sixième chaîne étant une chaîne autre que la cinquième chaîne dans le chemin de stockage local ; dans le cas où la cinquième chaîne n'existe pas dans le chemin de stockage local, l'extraction de la sixième chaîne dans le chemin de stockage local en tant que ledit au moins un terme de paramètre d'API ;
dans le cas où le format du paramètre d'API est un chemin de processus ou une commande shell de nom de processus et que le paramètre d'API contient une URL, l'extraction de l'URL dans le paramètre d'API, l'extraction d'un protocole, d'un nom de domaine ou d'une adresse IP, d'un port, d'un chemin + nom de fichier de l'URL, et la prise du protocole, du nom de domaine ou de l'adresse IP, et du port en tant que ledit au moins un terme de paramètre d'API ; la mise en correspondance du chemin + nom de fichier avec les termes du dictionnaire de segmentation prédéfini, et dans le cas où une troisième chaîne existe dans le chemin + nom de fichier, l'extraction de la troisième chaîne et d'une quatrième chaîne dans le chemin + nom de fichier en tant que ledit au moins un terme de paramètre d'API, la troisième chaîne étant une chaîne correspondant à au moins un terme du dictionnaire de segmentation dans le chemin + nom de fichier, et la quatrième chaîne étant une chaîne autre que la troisième chaîne dans le chemin + nom de fichier ; dans le cas où la troisième chaîne n'existe pas dans le chemin + nom de fichier, l'extraction de la quatrième chaîne dans le chemin + nom de fichier en tant que ledit au moins un terme de paramètre d'API ;
dans le cas où le format du paramètre d'API est un chemin de processus ou une commande shell de nom de processus et que le paramètre d'API contient une adresse IP, l'extraction de l'adresse IP dans le paramètre d'API en tant que ledit au moins un terme de paramètre d'API ;
dans le cas où le format du paramètre d'API est un chemin de processus ou une commande shell de nom de processus et que le paramètre d'API contient adresse IP : port, l'extraction de l'adresse IP : port dans le paramètre d'API, et la séparation de l'adresse IP et du port en tant que ledit au moins un terme de paramètre d'API en prenant « : » comme séparateur ;
l'extraction d'un paramètre dans une commande shell dans une chaîne autre qu'une URL, une adresse IP, et une adresse IP : port dans le paramètre d'API en tant que ledit au moins un terme de paramètre d'API ;
dans le cas où le format du paramètre d'API est une valeur numérique représentant une taille, le remplacement du paramètre d'API par une première chaîne spécifique correspondant à une section dans laquelle la valeur du paramètre d'API se situe, et la prise de la première chaîne spécifique en tant que ledit au moins un terme de paramètre d'API,
la plage de valeurs du paramètre d'API étant divisée en au moins une section, et les valeurs dans chaque section correspondant à une première chaîne spécifique ; et
dans le cas où le format du paramètre d'API est un type d'opération ou un attribut, la prise du paramètre d'API en tant que ledit au moins un terme de paramètre d'API.

8. Le procédé de détection de logiciels malveillants selon la revendication 1, dans lequel la détermination (101) de si le logiciel à détecter est un logiciel malveillant selon la séquence d'API du logiciel à détecter comprend :
la détermination d'un vecteur de caractéristiques du logiciel à détecter selon la séquence d'API du logiciel à détecter ; et
la détermination de si le logiciel à détecter est un logiciel malveillant selon le vecteur de caractéristiques du logiciel à détecter.

9. Le procédé de détection de logiciels malveillants selon la revendication 8, dans lequel la détermination de si le logiciel à détecter est un logiciel malveillant selon le vecteur de caractéristiques du logiciel à détecter comprend :
l'entrée du vecteur de caractéristiques du logiciel à détecter dans un classificateur de modèle de machine à vecteurs de support, SVM, préétabli, et la sortie d'une probabilité que le logiciel à détecter soit un logiciel malveillant et d'une probabilité que le logiciel à détecter soit un logiciel normal par le classificateur de modèle SVM ;
dans le cas où la probabilité que le logiciel à détecter soit un logiciel malveillant est supérieure à la probabilité que le logiciel à détecter soit un logiciel normal, la détermination que le logiciel à détecter est un logiciel malveillant ; et
dans le cas où la probabilité que le logiciel à détecter soit un logiciel malveillant est inférieure à la probabilité que le logiciel à détecter soit un logiciel normal, la détermination que le logiciel à détecter est un logiciel normal.

10. Le procédé de détection de logiciels malveillants selon la revendication 9, dans lequel, avant l'acquisition (100) de la séquence d'API du logiciel à détecter, le procédé comprend en outre :
l'établissement du classificateur de modèle SVM, l'établissement du classificateur de modèle SVM comprenant :
avant que le bac à sable exécute des échantillons d'entraînement, la prise des informations suivantes en tant que termes dans un dictionnaire de segmentation : tous les chemins de fichiers et noms de fichiers dans le bac à sable ; toutes les clés de registre dans le bac à sable ; les suffixes de tous les types de fichiers dans le bac à sable ; des chaînes spécifiques apparaissant dans des échantillons malveillants ;
l'exécution séquentielle de chaque échantillon d'entraînement dans le bac à sable pour acquérir la séquence d'API de chaque échantillon d'entraînement, la séquence d'API comprenant un nom d'API et au moins un terme de paramètre d'API correspondant ;
l'extraction de termes affinés dans l'échantillon d'entraînement en tant que termes dans le dictionnaire de segmentation ; et
l'entraînement et la modélisation des séquences d'API de tous les échantillons d'entraînement à l'aide d'un algorithme SVM pour obtenir le classificateur de modèle SVM.

11. Le procédé de détection de logiciels malveillants selon la revendication 10, dans lequel, dans le cas où ledit au moins un terme de paramètre d'API comprend au moins un nom de domaine et une adresse IP, avant l'extraction des termes affinés dans l'échantillon d'entraînement en tant que termes dans le dictionnaire de segmentation, le procédé comprend en outre au moins une des opérations suivantes :
le remplacement du nom de domaine dans la séquence d'API par une seconde chaîne spécifique ; et
le remplacement de l'adresse IP dans la séquence d'API par une troisième chaîne spécifique.

12. Le procédé de détection de logiciels malveillants selon la revendication 10 ou 11, dans lequel l'extraction des termes affinés dans l'échantillon d'entraînement en tant que termes dans le dictionnaire de segmentation comprend :
le comptage du nombre d'apparitions, dans tous les échantillons d'entraînement, de chaque terme de paramètre d'API dans les séquences d'API de tous les échantillons d'entraînement, et la mise des termes de paramètre d'API ayant un nombre d'apparitions dans tous les échantillons d'entraînement supérieur ou égal à un premier seuil prédéfini dans le dictionnaire de segmentation en tant que termes affinés ; et
l'exécution d'une analyse de chaîne commune maximale sur les termes de paramètre d'API ayant un nombre d'apparitions dans tous les échantillons d'entraînement inférieur au premier seuil prédéfini, et la mise des chaînes communes ayant une longueur supérieure à un second seuil prédéfini dans le dictionnaire de segmentation en tant que termes affinés.

13. Dispositif de détection de logiciels malveillants, comprenant des moyens pour mettre en œuvre le procédé de détection de logiciels malveillants selon l'une quelconque des revendications 1 à 12.

14. Support de stockage lisible par ordinateur, ayant enregistré dessus des programmes informatiques qui,
lorsqu'ils sont exécutés par un processeur, mettent en œuvre les opérations du procédé de détection de logiciels malveillants selon l'une quelconque des revendications 1 à 12.
